# EUROPEAN PATENT APPLICATION

(11) **EP 4 663 287 A1**
(43) Date of publication of application: **17.12.2025**
(21) Application number: 24763976.8
(22) Date of filing: 28.02.2024
(51) Int. Cl.: B01J 13/00, C01B 33/16, C01G 23/04

(54) **TWO-DIMENSIONAL COLLOIDAL CRYSTAL STRUCTURE AND PRODUCTION METHOD THEREFOR**

(30) Priority: 02.03.2023 JP 2023031506
(71) Applicant: PUBLIC UNIVERSITY CORPORATION NAGOYA CITY UNIVERSITY, Nagoya-shi, Aichi 467-8601 (JP)
(72) Inventor: YAMANAKA Junpei, Nagoya-shi, Aichi 467-8603 (JP); TOYOTAMA Akiko, Nagoya-shi, Aichi 467-8603 (JP); OKUZONO Tohru, Nagoya-shi, Aichi 467-8603 (JP); YAMAGUCHI Megumi, Nagoya-shi, Aichi 467-8603 (JP); TASHIRO Hikari, Nagoya-shi, Aichi 467-8603 (JP)
(74) Representative: Kuhnen & Wacker Patent- und Rechtsanwaltsbüro PartG mbB
(86) International application number: PCT/JP2024/007273
(87) International publication number: WO 2024/181497

(57) **Abstract**

To provide a two-dimensional colloidal crystal structure having few defects in the crystal structure. A titania-containing layer 2 is formed on a substrate 1, and a two-dimensional colloidal crystal layer 4 is further formed thereon. This structure is produced by 1) forming the metal oxide layer 2 on the surface of the substrate 1 as the substrate preparation step (S1), 2) preparing a dispersion 6 of charged three-dimensional colloidal crystals 5 having a surface charge of an opposite sign to the surface charge of the metal oxide layer 2 as the colloidal crystal dispersion preparation step (S2), and 3) bringing the dispersion 6 of the charged three-dimensional colloidal crystals 5 into contact with the metal oxide layer 2 as the two-dimensional colloidal crystal formation step (S3).

## Description

### TECHNICAL FIELD

The present invention relates to a two-dimensional colloidal crystal structure and a method for producing the same. Here, the two-dimensional colloidal crystal refers to a single-layer structure in which particles having a uniform particle size are regularly arranged on a plane. In addition, the two-dimensional colloidal crystal structure refers to a structure in which a layer composed of a two-dimensional colloidal crystal is formed on the surface of a substrate.

### BACKGROUND ART

As a new functional material, a two-dimensional colloidal crystal structure has attracted attention. For example, in various sensors using surface adsorption, it has been proposed to use a two-dimensional colloidal crystal structure as a transducer that converts a surface adsorption amount into another signal, or to use a two-dimensional colloidal crystal structure for spectroscopic analysis using Surface Plasmon Resonance (SPR).

As a method for producing a two-dimensional colloidal crystal structure, a method is known in which a dispersion of three-dimensional colloidal crystals in which particles having a uniform particle size are three-dimensionally and regularly arranged is brought into contact with a substrate, to thereby transfer the two-dimensional colloidal crystals from the surface of the three-dimensional colloidal crystals to the substrate by electrostatic attraction (for example, Patent Literature 1). According to this method, a two-dimensional colloidal crystal structure can be produced without using a complicated pattern formation technique for controlling the arrangement of particles.

### CITATIONS LIST

### PATENT LITERATURE

Patent Literature 1: JP 2020-34543 A

### SUMMARY OF INVENTION

### TECHNICAL PROBLEMS

However, in the method for producing a two-dimensional colloidal crystal structure described in Patent Literature 1, many defects exist in the crystal structure. For this reason, a two-dimensional colloidal crystal structure having few defects in the crystal structure has been required.

The present invention has been made in view of the above conventional circumstances, and a problem to be solved is to provide a two-dimensional colloidal crystal structure having few defects in the crystal structure.

### SOLUTIONS TO PROBLEMS

A method for producing a two-dimensional colloidal crystal structure according to the present invention includes:
a substrate preparation step of preparing a substrate having a metal oxide layer whose surface has an isoelectric point of 4 or more and 8 or less;
a colloidal crystal dispersion preparation step of preparing a dispersion of charged three-dimensional colloidal crystals composed of colloidal particles having the same sign as a surface charge of the metal oxide layer; and
a two-dimensional colloidal crystal formation step of bringing the dispersion of the charged three-dimensional colloidal crystals into contact with the metal oxide layer, and then adjusting the surface charge of the metal oxide layer so as to have a sign different from a surface potential of the colloidal particles constituting the charged three-dimensional colloidal crystals to transfer two-dimensional colloidal crystals onto the substrate.

In the method for producing a two-dimensional colloidal crystal of the present invention, a substrate having a metal oxide layer whose surface has an isoelectric point of 4 or more and 8 or less is prepared (substrate preparation step). In addition, a dispersion of charged three-dimensional colloidal crystals composed of colloidal particles having the same sign as the surface charge of the metal oxide layer is prepared (colloidal crystal dispersion preparation step). Then, as the two-dimensional colloidal crystal formation step, the dispersion of the charged three-dimensional colloidal crystals is brought into contact with the metal oxide layer. At this time point, electrostatic repulsive force is generated between the charged three-dimensional colloidal crystals and the metal oxide layer, and the charged three-dimensional colloidal crystals maintain an unadsorbed state. However, thereafter, by adjusting the surface charge of the metal oxide layer of the substrate so as to have a sign different from the surface charge of the particles constituting the charged three-dimensional colloidal crystals, electrostatic attraction acts between the charged three-dimensional colloidal crystals and the metal oxide layer, and the two-dimensional colloidal crystals are transferred onto the substrate.

The adjustment method for reversing the sign of the surface charge in the two-dimensional colloidal crystal formation step can be easily performed by adjusting the pH of the dispersion of charged three-dimensional colloidal crystals within a pH range across the isoelectric point. The concentration of an acid or an alkali required for setting the pH of the dispersion to be in the range crossing the isoelectric point of 4 or more and 8 or less is lower than that in the case of setting the pH to be in the range crossing the isoelectric point of less than 4 or more than 8. Therefore, the salt concentration of the dispersion of the charged three-dimensional colloidal crystals can be lowered. As a result, the electric double layer becomes thick, and aggregation of colloidal particles and melting of the colloidal crystal structure are prevented. Therefore, the two-dimensional colloidal crystals are smoothly transferred to the substrate, and defects in the crystal structure are reduced.

According to the test results of the inventors, by setting the change in pH of the dispersion of charged three-dimensional colloidal crystals in the two-dimensional colloidal crystal formation step to 4 or less and setting the salt concentration to 150 µM or less, the transfer of the two-dimensional colloidal crystals to the substrate is more smoothly performed, and defects in the crystal structure are reliably reduced.

As a method for adjusting the surface charge of the metal oxide layer so as to have a sign different from the surface charge of the particles constituting the charged three-dimensional colloidal crystal, the surface charge of the metal oxide layer can be easily adjusted by adjusting the pH of the dispersion of the charged three-dimensional colloidal crystals within a pH range crossing the isoelectric point. Examples of the method include 1) a method of adding a solution of an acid or an alkali, 2) a method of adsorbing hydrogen ions or hydroxide ions using a cation exchange resin or an anion exchange resin, and 3) a method of absorbing an acid (for example, hydrogen chloride gas) or an alkali (for example, ammonia gas or carbon dioxide gas) in a gaseous state. When carbon dioxide gas is used, carbon dioxide gas contained in the atmosphere may be used.

The range of the isoelectric point of the metal oxide layer is 4 or more and 8 or less from the viewpoint of reducing defects of the two-dimensional colloidal crystal structure, but is preferably 4.5 or more and 7.5 or less. As the metal oxide layer having an isoelectric point of 4 or more and 8 or less, for example, a titania layer having an isoelectric point of about 6 or an alumina layer having an isoelectric point of 8 can be used. It is also possible to use a layer containing a metal composite oxide which is a mixed system of at least two kinds of metal elements selected from Ti, Si, and Al. In particular, a titania-silica mixed system, an alumina-silica mixed system, or a titania-alumina mixed system can be suitably used from the viewpoint of obtaining an isoelectric point of 4 or more and 8 or less. The metal composite oxide can be more precisely controlled to have a predetermined isoelectric point by changing the content ratio of each metal.

The metal oxide layer can be easily obtained by a hydrolysis polycondensation method of a metal alkoxide (so-called sol-gel method). According to the sol-gel method, the isoelectric point of the metal oxide layer can be more precisely controlled by adjusting the ratio of the plurality of metal alkoxides used.

The coefficient of variation (CV)of the particle size of the colloidal particles constituting the charged three-dimensional colloidal crystals is preferably 20% or less. When the coefficient of variation of the particle size is 20% or less, a colloidal crystal structure is more easily formed, and defects in the crystal structure are also reduced. Here, the coefficient of variation of the particle size refers to a value of (standard deviation of particle size ×100/average particle size), and is preferably 15% or less, more preferably 10% or less, and most preferably about 5% or less.

The average particle size of the colloidal particles constituting the charged three-dimensional colloidal crystals is preferably 50 nm or more and 500 nm or less. When the average particle size of the colloidal particles is 500 nm or less, the sedimentation rate in the dispersion is reduced, and three-dimensional colloidal crystals are more easily generated. In addition, when the average particle size of the colloidal particles is 50 nm or more, the thermal motion of the particles is not so intense, and thus charged colloidal crystals are more easily generated.

The charge of the colloidal particles that form the colloidal crystals may be either positive or negative. In the case of negatively charged colloidal particles, the substrate is first negatively charged to prevent adsorption of the colloidal particles. After sufficiently regularly arranged charged three-dimensional colloidal crystals are generated, the substrate is positively charged to cause the colloidal particles to be adsorbed to the substrate, thereby producing two-dimensional colloidal crystals. In the case of positively charged colloidal particles, the substrate is first positively charged to prevent adsorption of the colloidal particles. After sufficiently regularly arranged charged three-dimensional colloidal crystals are generated, the substrate is negatively charged to cause the colloidal particles to be adsorbed to the substrate, thereby producing two-dimensional colloidal crystals.

In the two-dimensional colloidal crystal structure of the present invention, a metal oxide layer having an isoelectric point of 4 or more and 8 or less is formed on a substrate, and a two-dimensional colloidal crystal layer is formed on the metal oxide layer. This two-dimensional colloidal crystal structure can be produced by the method for producing a two-dimensional colloidal crystal of the present invention.

In addition, the two-dimensional colloidal crystal layer may be composed of metal colloidal particles. The metal colloidal particles may be composed of colloidal gold particles or platinum group metals such as colloidal platinum particles, or silver colloidal particles.

### BRIEF DESCRIPTION OF DRAWINGS

Fig. 1 is a schematic view of a two-dimensional colloidal crystal structure.
Fig. 2 is a process chart showing a method for producing a two-dimensional colloidal crystal structure.
Fig. 3 is a schematic view in the case of modifying the surface of the colloidal gold particle with MPS.
Fig. 4 is a graph showing the presence or absence of adsorption of colloidal silica particles to the substrate at various values of pH for the surface-modified glass substrates of Test Examples 1 to 4 in which the mixing ratio between TTIP and TEOS is changed.
Fig. 5 shows measurement results of the isoelectric point of the surface-modified glass substrates of Test Examples 1 to 4 in which the mixing ratio between TTIP and TEOS is changed.
Fig. 6 is a graph showing the presence or absence of adsorption of colloidal silica particles to the substrate at various values of pH for the surface-modified glass substrates of Test Examples 5 to 8 in which the mixing ratio between ALIP and TEOS is changed.
Fig. 7 shows measurement results of the isoelectric point of the surface-modified glass substrates of Test Examples 5 to 8 in which the mixing ratio between ALIP and TEOS is changed.
Fig. 8 is a graph showing the calcining temperature and the presence or absence of adsorption in a TTIP surface-modified glass substrate.
Fig. 9 shows a schematic view and a photograph of an apparatus used for producing a glass substrate having a surface coated with a metal oxide by a dip coating method.
Fig. 10 is a graph showing the relationship between the lowering speed of the liquid level and the minimum HCl concentration at which colloidal silica particles are adsorbed.
Fig. 11 is a graph showing the presence or absence of adsorption of colloidal silica particles to the substrate at various vlues of pH for the surface-modified glass substrates of Test Examples 9 to 12 in which the mixing ratio of TTIP to ALIP is changed.
Fig. 12 shows measurement results of the isoelectric point of the surface-modified glass substrates of Test Examples 9 to 12 in which the mixing ratio between TTIP and ALIP is changed.
Fig. 13 shows an optical micrograph of the two-dimensional colloidal gold crystal structure of Comparative Example 1 (in the case of no alkali addition), and a radial distribution function obtained from the optical micrograph.
Fig. 14 shows an optical micrograph of the two-dimensional colloidal gold crystal structure (in the case of alkali addition) of Comparative Example 1, and a radial distribution function obtained from the optical micrograph.
Fig. 15 is a schematic view showing a method for producing a two-dimensional charged colloidal crystal.
Fig. 16 is a graph showing the relationship between the NaHCO₃ concentration and the primary peak height h of the radial distribution function g (r).
Fig. 17 is a graph showing the relationship between the surface potential and the pH of SiO₂, TiO₂, Al₂O₃, and APTES-modified SiO₂.
Fig. 18 shows an optical micrograph of the two-dimensional colloidal gold crystal of Example 2 obtained under the condition of [NaHCO₃] = 100 µM.
Fig. 19 shows a radial distribution function obtained from the optical micrograph of Fig. 18.
Fig. 20 shows an optical micrograph of the two-dimensional colloidal silica crystal of Example 3.
Fig. 21 shows an optical micrograph of the two-dimensional polystyrene colloidal crystal of Example 4.
Fig. 22 shows an optical micrograph of the two-dimensional polystyrene colloidal crystal of Example 5.
Fig. 23 is a graph showing the relationship between the HCl concentration and the particle concentration φ at the crystal-amorphous phase boundary.
Fig. 24 shows optical micrographs of the case of HCl concentration = 100 µM and the case of HCl concentration = 200 µM of a colloidal silica with a particle concentration φ = 30 vol%.
Fig. 25 shows optical micrographs showing a lapse of time when an HCl solution is diffused.

### DESCRIPTION OF EMBODIMENT

Embodiments of the present invention will be described.

### <Configuration of two-dimensional colloidal crystal structure>

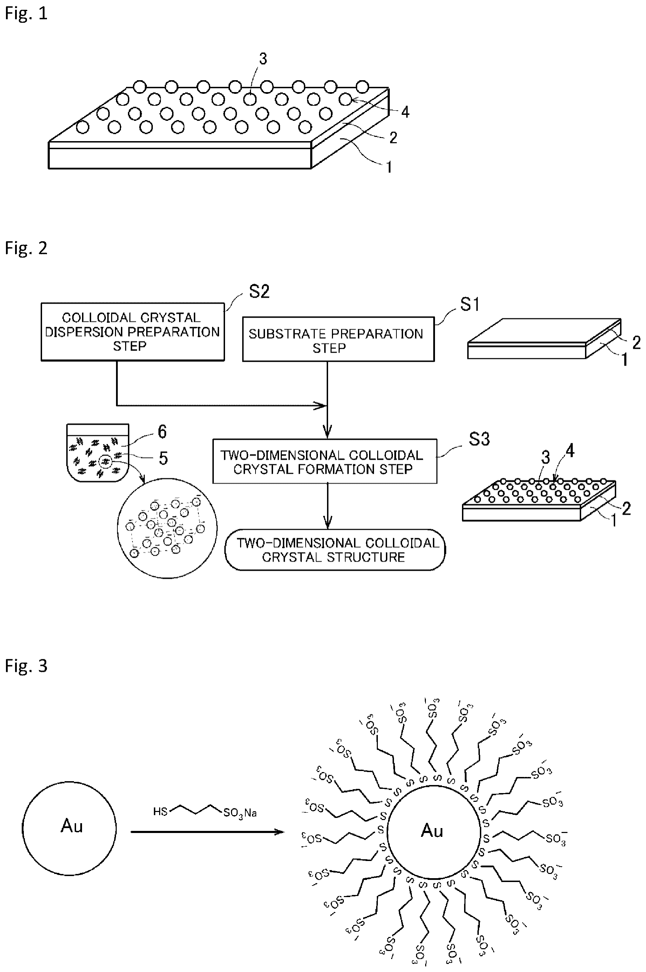

In the two-dimensional colloidal crystal structure, as shown in Fig. 1, a metal oxide layer 2 is laminated on a substrate 1, and a two-dimensional colloidal crystal layer 4 in which colloidal particles 3 are regularly arranged in a single layer is formed on the surface of the metal oxide layer 2. The isoelectric point of the metal oxide layer 2 is 4 or more and 8 or less. As such a metal oxide, titania having an isoelectric point of about 6 can be used. In addition, a composite oxide of silica and titania, silica and alumina, titania and alumina, and the like can also be used. As the substrate 1, an insulating substrate (for example, a glass substrate, a plastic substrate, or the like) or a conductive substrate (for example, a metal substrate or the like) can be used.

If the isoelectric point of the substrate 1 itself is 4 or more and 8 or less, the substrate 1 and the metal oxide layer 2 may be made of the same homogeneous material.

### <Method for producing two-dimensional colloidal crystal structure>

### Embodiment 1

Fig. 2 is a process chart showing a method for producing a two-dimensional colloidal crystal structure. Each step will be described below.

### • Substrate preparation step (S1)

A substrate 1 is prepared, and a metal oxide layer 2 having an isoelectric point of 4 or more and 8 or less is formed on the surface of the substrate 1. Examples of a method for forming the metal oxide layer 2 on the surface of the substrate 1 include a wet method and a dry method.

Examples of the wet method include a sol-gel method using a metal alkoxide such as titanium alkoxide, aluminum alkoxide, or silicon alkoxide as a raw material, and a method of anodizing a titanium substrate or an aluminum substrate in an electrolytic solution. In the wet method using the sol-gel method, the substrate 1 is immersed in a solution containing a metal alkoxide, hydrolyzed with an acid or water, then taken out from the solution, and heated to perform polycondensation to form a titania layer. In addition, the substrate 1 is immersed in a solution prepared by mixing a plurality of kinds of metal alkoxides, then pulled up from the solution, and heated to perform polycondensation, whereby metal composite oxides with various composition ratios can be obtained depending on the composition of the solution. When the substrate 1 is pulled up from the immersion liquid, the film thickness can be controlled by controlling the pulling speed.

Examples of the dry method include vacuum vapor deposition, sputtering, and CVD. In these dry methods, titania, silica, or alumina can be used as a metal source, and a method of reacting Ti and oxygen in a system to produce titania can also be used.

### • Colloidal crystal dispersion preparation step (S2)

A dispersion 6 of charged three-dimensional colloidal crystals 5 is prepared. The charged three-dimensional colloidal crystals refer to colloidal crystals that are three-dimensionally and regularly arranged by electrostatic interaction between charged colloidal particles. As colloidal particles 3 constituting the charged three-dimensional colloidal crystals 5, particles of metals such as gold and platinum, particles made of silica and silicates, particles made of an organic polymer such as polystyrene, or the like can be used.

In order to prepare the dispersion 6 of the charged three-dimensional colloidal crystals 5, various soluble ionic compounds may be added so as to change the surface potential of the colloidal particles 3. When metal colloidal particles are used, the surface of the metal colloidal particles may be modified with a compound having an anionic functional group. When gold is used as the metal colloidal particles, an organic compound having a thiol group and an anionic functional group (for example, 3-mercapto-1-propanesulfonic acid sodium salt, and the like) can be suitably used. This is because when the thiol group is bonded to the surface of gold to form a self-assembled film, the colloidal gold particles are negatively charged due to the anionic functional group (see Fig. 3).

The salt concentration of the dispersion 6 is 150 µM or less.

### • Two-dimensional colloidal crystal formation step (S3)

The pH of the dispersion 6 is adjusted in two stages as follows.

That is, after 1) the surface potential of the metal oxide layer 2 and the surface charge of the colloidal particles 3 are set to have the same sign by adjusting the pH of the dispersion 6, and the charged three-dimensional colloidal crystals 5 are sufficiently grown, 2) the pH is readjusted so that the surface charge of the metal oxide layer 2 is opposite to the surface charge of the colloidal particles 3, and the charged three-dimensional colloidal crystals 5 are electrostatically adsorbed to the surface of the metal oxide layer 2.

Performing such two-stage pH adjustment prevents the colloidal particles 3 from being randomly adsorbed to the metal oxide layer 2 before formation of the charged three-dimensional colloidal crystals 5, so that defects in the crystal structure in a two-dimensional colloidal crystal layer 4 are reduced.

As a method for readjusting the pH, a method of lowering the pH by absorbing carbon dioxide contained in the air can also be used.

As a method for forming the two-dimensional colloidal crystal layer 4 on the metal oxide layer 2, a method of dropping the dispersion 6 of the three-dimensional colloidal crystals 5 onto the substrate 1 on which the metal oxide layer 2 is formed can be used.

### (Advantageous effects)

In the method for producing a two-dimensional colloidal crystal structure according to the embodiment, the isoelectric point of the metal oxide layer 2 is 4 or more and 8 or less. Therefore, even when the pH of the dispersion 6 of the three-dimensional colloidal crystals 5 is not set to more than 8 or less than 4, the surface charge of the three-dimensional colloidal crystals 5 is opposite to the surface charge of the metal oxide layer 2, and the three-dimensional colloidal crystals 5 are electrostatically adsorbed to the substrate 1. This makes it possible to suppress melting of the three-dimensional colloidal crystals 5 and/or aggregation of particles due to an increase in ionic strength, and to transfer the two-dimensional colloidal gold crystals 4 having fewer defects in crystal structure onto the metal oxide layer 2.

In general, it is said that, in a substrate produced by using surface plasmon resonance (SPR), a distance between particle surfaces is required to be 300 to 600 nm (see Scientific Reports, Volume 5, Article number: 14419 (2015)). The present inventors have found that in order to produce a three-dimensional charged colloidal crystal having such a wide distance between particles, it is effective to adjust the three-dimensional charged colloid under the condition of a low salt concentration of 150 µM or less. The three-dimensional charged colloid can be adjusted under the condition of a low salt concentration of 150 µM or less by using the production method of the above embodiment. Therefore, the three-dimensional charged colloidal crystals can be fixed to the substrate under the condition of a low salt concentration, and the two-dimensional charged colloidal crystals can be produced.

### EXAMPLES

### - Production of metal oxide layer-formed glass substrate-

In order to measure the isoelectric point of the metal oxide layer, the metal oxide layer-formed glass substrates of Test Examples 1 to 12 shown below were produced.

The reagents used for the formation of the metal oxide layer are as follows.

Titanium tetraisopropoxide (abbreviation: TTIP): manufactured by FUJIFILM Wako Pure Chemical Corporation

Tetraethoxysilane (abbreviation: TEOS): manufactured by Shin-Etsu Chemical Co., Ltd.

### Aluminium isopropoxide (abbreviation: ALIP): manufactured by FUJIFILM Wako Pure Chemical Corporation

### (Test Examples 1 to 4)

### <Production of titania layer-formed glass substrate and titania-silica composite oxide layer-formed glass substrate>

First, 50 µL of TEOS, 92.5 mL of ethanol, 4.5 mL of 0.1 M HCl, and 5.6 µL of Milli-Q water were charged into a glass bottle, mixed, and kept at 40°C for 10 minutes to prepare a TEOS hydrolyzed solution. Then, EtOH, TTIP, the TEOS hydrolyzed solution, a 0.1 M HCl solution, and pure water (hereinafter referred to as "Milli-Q water") prepared by a Milli-Q water production apparatus were charged into a glass bottle in the proportions shown in Table 1, and stirred at 300 rpm for 20 hours. The reaction solution was transferred to a polypropylene staining jar (Thermo Fisher Scientific), and a cover glass for an optical microscope (NEO micro cover glass 24 mm × 60 mm, Matsunami Glass Ind., Ltd.) as a glass substrate was immersed therein for 1 hour. After immersion, the glass substrate was taken out and kept in an oven set at 50°C for 1 hour, and then the glass surface was washed with Milli-Q water and dried in an oven set at 80°C. Thus, the titania layer-formed glass substrate of Test Example 1 and the titania-silica composite oxide layer-formed glass substrates of Test Examples 2 to 4 were produced.

**[Table 1]**

| | EtOH (mL) | TTIP (µL) | TEOS hydrolyzed solution (mL) | 0.1 M HCl (µL) | Milli-Q water (µL) |
|---|---|---|---|---|---|
| Test Example 1 | 40 | 40 | 0 | 186 | 8.0 |
| Test Example 2 | 36 | 36 | 4 | 0 | 0 |
| Test Example 3 | 20 | 20 | 20 | 0 | 0 |
| Test Example 4 | 4 | 4 | 36 | 0 | 0 |

### (Test Examples 5 to 8)

### <Production of alumina layer-formed glass substrate and alumina-silica composite oxide layer-formed glass substrate>

EtOH, an EtOH solution of ALIP, a TEOS hydrolyzed solution, a 0.1 M HCl solution, and Milli-Q water were charged into a glass bottle in the proportions shown in Table 2, and the mixture was stirred at 300 rpm for 20 hours. The reaction solution was transferred to a polypropylene staining jar (Thermo Fisher Scientific), and the same glass substrate as used in Test Examples 1 to 4 was immersed therein for 1 hour. Thereafter, the glass substrate was taken out and kept in an oven set at 50°C for 1 hour, and then the glass surface was washed with Milli-Q water and dried in an oven set at 80°C. Thus, the alumina layer-formed glass substrate of Test Example 5 and the alumina-silica composite oxide layer-formed glass substrates of Test Examples 6 to 8 were prepared.

**[Table 2]**

| | EtOH (mL) | ALIP* (mL) | TEOS hydrolyzed solution (mL) | 0.1 M HCl (µL) | Milli-Q water (µL) |
|---|---|---|---|---|---|
| Test Example 5 | 28 | 12 | 0 | 186 | 8 |
| Test Example 6 | 25 | 11 | 4 | 0 | 0 |
| Test Example 7 | 14 | 6.0 | 20 | 0 | 0 |
| Test Example 8 | 2.8 | 1.2 | 36 | 0 | 0 |

| | | | | | |
|---|---|---|---|---|---|
| *: ALIP was added as 0.29 wt% ethanol solution. | | | | | |

### <Production of titania-alumina composite oxide layer-formed glass substrate>

EtOH, TTIP, ALIP, a 0.1 M HCl solution and Milli-Q water were charged into a glass bottle in the proportions shown in Table 3, and the mixture was stirred at 300 rpm for 20 hours. The reaction solution was transferred to a polypropylene staining jar (Thermo Fisher Scientific), and the same glass substrate as used in Test Examples 1 to 4 was immersed therein for 1 hour. Thereafter, the glass substrate was taken out and kept in an oven set at 50°C for 1 hour, and then the glass surface was washed with Milli-Q water and dried in an oven set at 80°C. Thus, the titania-alumina composite oxide layer-formed glass substrates of Test Examples 9 to 12 were prepared.

**[Table 3]**

| | EtOH (mL) | TTIP (µL) | ALIP (mL) | 0.1 M HCl (µL) | Milli-Q water (µL) |
|---|---|---|---|---|---|
| Test Example 9 | 36.2 | 36 | 3.6 | 186 | 8 |
| Test Example 10 | 29.0 | 28 | 10.8 | 186 | 8 |
| Test Example 11 | 21.8 | 20 | 18.0 | 186 | 8 |
| Test Example 12 | 7.5 | 4 | 32.3 | 186 | 8 |

| | | | | | |
|---|---|---|---|---|---|
| ***: ALIP was added as 0.097 wt% ethanol solution.** | | | | | |

### - Measurement of isoelectric point-

The isoelectric point of each of the surface-modified glass substrates of Test Examples 1 to 12 was measured. Since the surface potential of these surface-modified glass substrates changes depending on the pH, the pH at which the surface potential becomes 0 is the isoelectric point. Particles charged to a sign opposite to the surface potential of the substrate are electrostatically adsorbed to the substrate. Therefore, the isoelectric point was determined from the presence or absence of adsorption of the colloidal silica particles to the substrate. HCl and NaOH dispersions containing 0.1 vol% of colloidal silica particles were prepared at different concentrations, and dropped onto the produced glass substrate. The presence or absence of adsorption of the particles was observed with an inverted optical microscope (ECLIPSE, Ti-S, Nikon). The results are shown below.

### (Isoelectric point of titania-silica composite oxide-modified glass substrate)

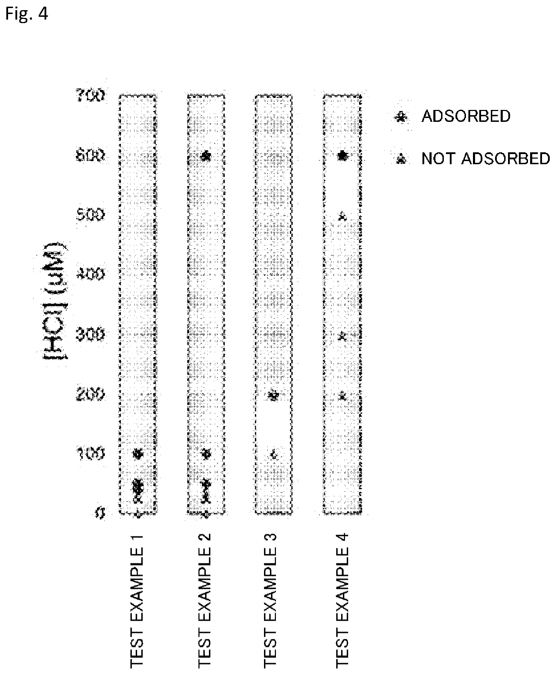

For the surface-modified glass substrates of Test Examples 1 to 4, the presence or absence of adsorption to the glass substrate using colloidal silica particles was observed. As shown in Fig. 4, the minimum HCl concentration at which the colloidal silica particles were adsorbed to the substrate was 40 µM for the surface-modified glass substrate of Test Example 1, 50 µM for the surface-modified glass substrate of Test Example 2, 200 µM for the surface-modified glass substrate of Test Example 3, and 600 µM for the surface-modified glass substrate of Test Example 4. This result reveals that the isoelectric point of the surface-modified glass substrate can be controlled by changing the ratio between TTIP and TEOS.

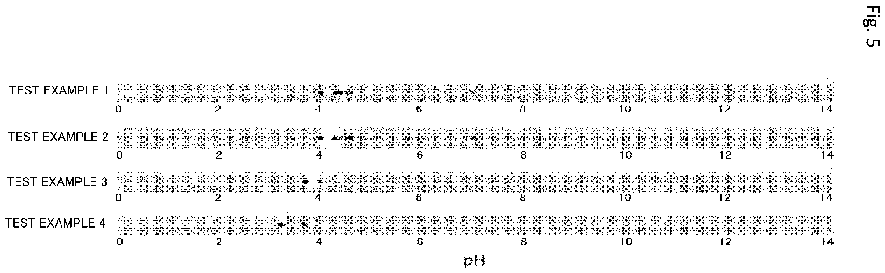

In addition, for the titania-silica composite oxide-modified glass substrates of Test Examples 1 to 4, the results of obtaining the pH corresponding to the measurement results of the isoelectric point of the surface-modified glass substrates are shown in Fig. 5. This graph reveals that the isoelectric point of the surface potential can be controlled according to the change in the mixing ratio between TTIP and TEOS. The reason why the isoelectric point in Test Example 1 in which TEOS was not mixed is lower than the expected isoelectric point 6 of titania is presumed to be that a part of the surface of the glass substrate is not modified with TTIP.

### (Isoelectric point of alumina-silica composite oxide-modified glass substrate)

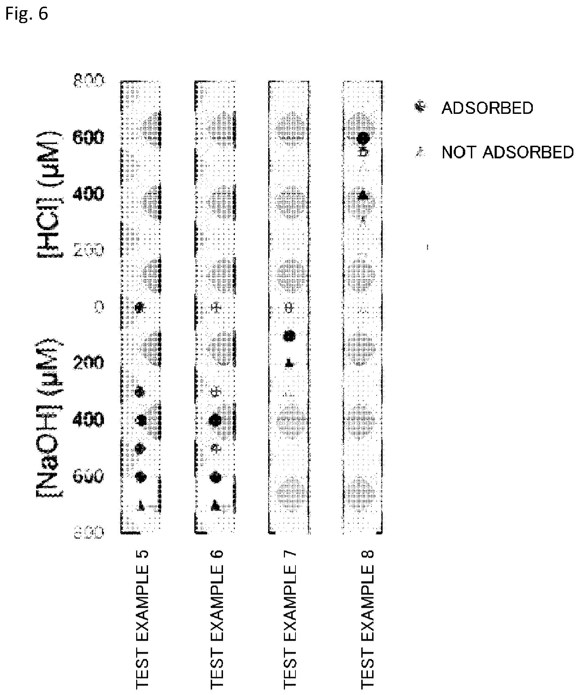

For the surface-modified glass substrates of Test Examples 5 to 8, the presence or absence of adsorption to the glass substrate prepared using colloidal silica particles was observed. As shown in Fig. 6, the minimum concentration at which the colloidal silica particles were adsorbed to the substrate was 600 µM of NaOH for the surface-modified glass substrate of Test Example 5, 600 µM of NaOH for the surface-modified glass substrate of Test Example 6, 100 µM of NaOH for the surface-modified glass substrate of Test Example 7, and 550 µM of HCl for the surface-modified glass substrate of Test Example 8. This result reveals that the isoelectric point of the surface-modified glass substrate can be controlled in a wide range by changing the ratio between ALIP and TEOS.

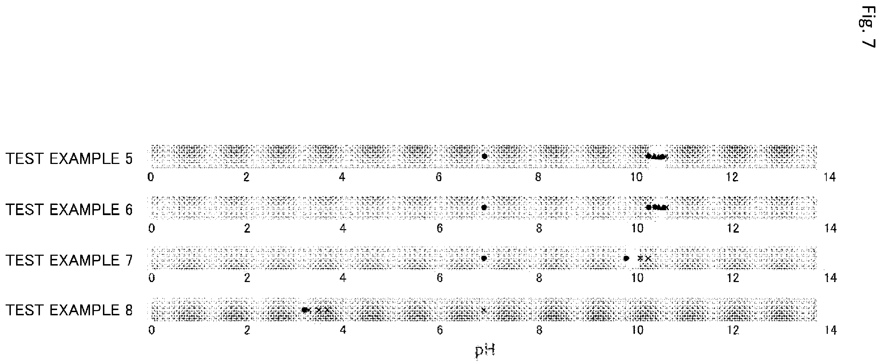

In addition, for the alumina-silica composite oxide-modified glass substrates of Test Examples 5 to 8, the results of obtaining the pH corresponding to the measurement results of the isoelectric point of the surface-modified glass substrates are shown in Fig. 7. This graph reveals that the isoelectric point of the surface potential can be controlled according to the change in the mixing ratio between ALIP and TEOS.

### <Relationship between calcining temperature and isoelectric point in TTIP surface-modified glass substrate>

The relationship between the calcining temperature and the isoelectric point of the TTIP surface-modified glass substrate was examined.

First, 40 mL of ethanol, 186 µL of 0.1 M HCl, 8 µL of Milli-Q water, and 40 µL of TTIP were charged into a glass bottle, and the mixture was stirred at 300 rpm at room temperature for 20 hours. The reaction solution was transferred to a polypropylene staining jar, and a cover glass for an optical microscope was immersed therein as a glass substrate for 1 hour. Thereafter, the glass substrate was taken out, kept in an oven at 50°C for 1 hour, put in a calcining furnace, and fired at 200, 350, and 500°C for 30 minutes. Then, the glass substrate was taken out from the calcining furnace, the surface of the glass substrate was washed with Milli-Q water, and then the glass substrate was dried in an oven at 80°C. The isoelectric point of the fired TTIP surface-modified glass substrate thus obtained was measured based on the presence or absence of adsorption of the colloidal silica particles described above.

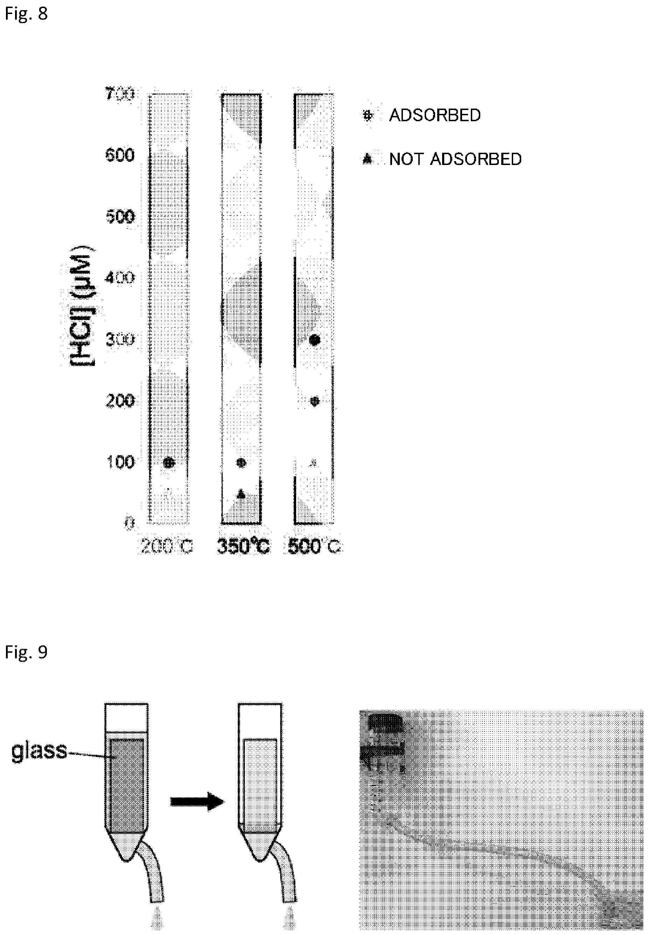

As shown in Fig. 8, the result reveals that in the glass substrates calcined at 200°C and 350°C, silica particles were adsorbed to the substrate at 100 µM or more of HCl, and in the glass substrate calcined at 500°C, silica particles were adsorbed to the substrate at 200 µM or more of HCl. That is, the result reveals that the isoelectric point changed to the acidic side at a calcining temperature of 500°C.

### <Production of TTIP surface-modified glass substrate by dip coating method>

A TTIP surface-modified glass substrate was produced by a method according to the dip coating method described in the following document.

Uchiyama, H., Namba, W., & Kozuka, H., "Spontaneous Formation of Linear Striations and Cell-like Patterns on Dip-Coating Titania Films Prepared from Alkoxide Solutions", Langmuir, Vol. 26, No. 13, 11479 to 11484, 2010.

First, 40 mL of ethanol, 186 µL of 0.1 M HCl, 8 µL of Milli-Q water, and 40 µL of TTIP were charged into a glass bottle, and the mixture was stirred at 300 rpm at room temperature for 20 hours. The obtained mixed solution was put into a centrifuge tube or a bar bottle, and then a cover glass for an optical microscope (NEO micro cover glass 24 mm × 60 mm, Matsunami Glass Ind., Ltd.) was immersed therein as a glass substrate. The mixed liquid was gradually discharged from a discharge tube connected to the lower end of the centrifuge tube (or the bar bottle) (see Fig. 9). The discharge speed was adjusted by changing the thickness of the discharge tube. The discharge speed of the solution was calculated from the lowering speed of the liquid level. After completion of the discharge, the glass substrate was taken out and kept in an oven set at 50°C for 1 hour, the surface of the glass substrate was washed with Milli-Q water, and then the glass substrate was dried in an oven set at 80°C.

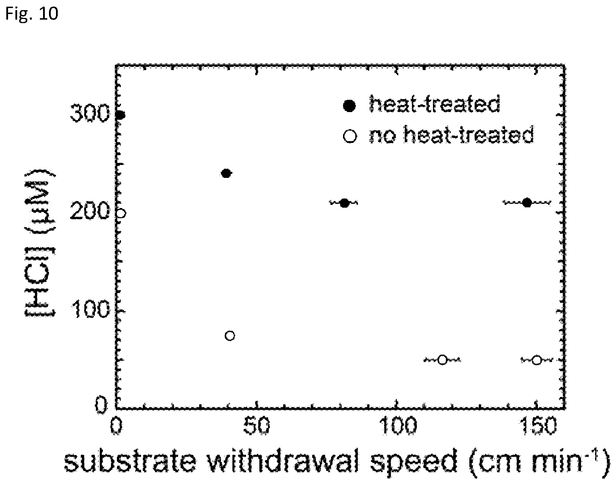

For the TTIP surface-modified glass substrates produced by using the above method, the presence or absence of adsorption was observed based on the presence or absence of adsorption of colloidal silica particles. The results are shown in Fig. 10. The horizontal axis represents the lowering speed of the liquid level, and the vertical axis represents the minimum HCl concentration at which colloidal silica particles are adsorbed to each substrate. In the glass substrate not subjected to calcining, the isoelectric point moved to the acidic side as the liquid level speed decreased. The above result reveals that the surface modification of the glass substrate with TTIP was also possible by the dip coating method. Incidentally, this method has an advantage that the film thickness of the titania-containing layer can be controlled by controlling the lowering speed of the liquid level (that is, the discharge speed of the liquid).

### (Isoelectric point of titania-alumina composite oxide-modified glass substrate)

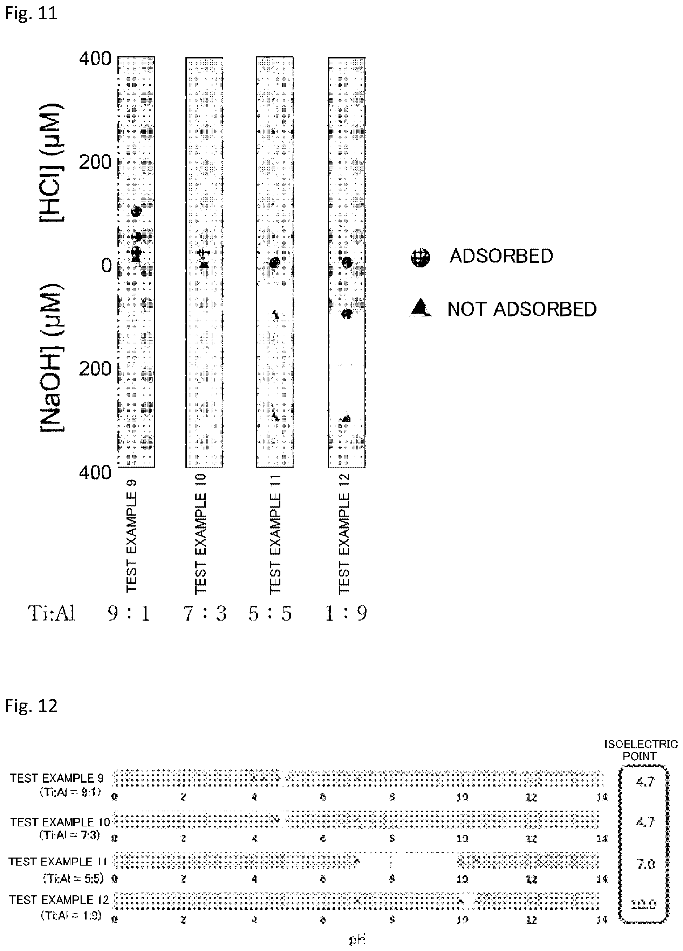

For the surface-modified glass substrates of Test Examples 9 to 12, the presence or absence of adsorption to the glass substrate produced by using colloidal silica particles was observed. As shown in Fig. 11, the minimum concentration at which the colloidal silica particles were adsorbed to the substrate was 20 µM of HCl for the surface-modified glass substrate of Test Example 9, 20 µM of HCl for the surface-modified glass substrate of Test Example 10, no addition for the surface-modified glass substrate of Test Example 11, and 100 µM of NaOH for the surface-modified glass substrate of Test Example 12. This result reveals that the isoelectric point of the surface-modified glass substrate can be controlled by changing the ratio between TTIP and ALIP.

In addition, for the titania-alumina composite oxide-modified glass substrates of Test Examples 9 to 12, the results of obtaining the pH corresponding to the measurement results of the isoelectric point of the surface-modified glass substrates are shown in Fig. 12. This graph reveals that the isoelectric point of the surface potential can be controlled by pH according to the change in the mixing ratio between TTIP and ALIP.

### - Production of two-dimensional colloidal crystal structure-

### <Production of two-dimensional colloidal gold crystal structure>

### (Comparative Example 1)

### • Production of two-dimensional colloidal gold crystal structure using APTES-modified glass substrate

The same glass substrate as used in Test Examples 1 to 4 was used. To a polypropylene staining jar (Thermo Fisher Scientific), 60 mL of Milli-Q water, 60 µL of 1 mol/l acetic acid, and 60 µL of aminopropyltriethoxysilane (APTES) were added and mixed to obtain an APTES hydrolyzed solution, and the glass substrate was immersed therein for 1 hour. Thereafter, the glass substrate was taken out, the surface of the glass substrate was washed with Milli-Q water, and the glass substrate was dried in an oven at set 40°C. In this way, APTES was subjected to dehydration condensation with the silanol group of the glass substrate, to thereby produce a silica layer-formed glass substrate in which an amino group was introduced into the surface of the glass substrate.

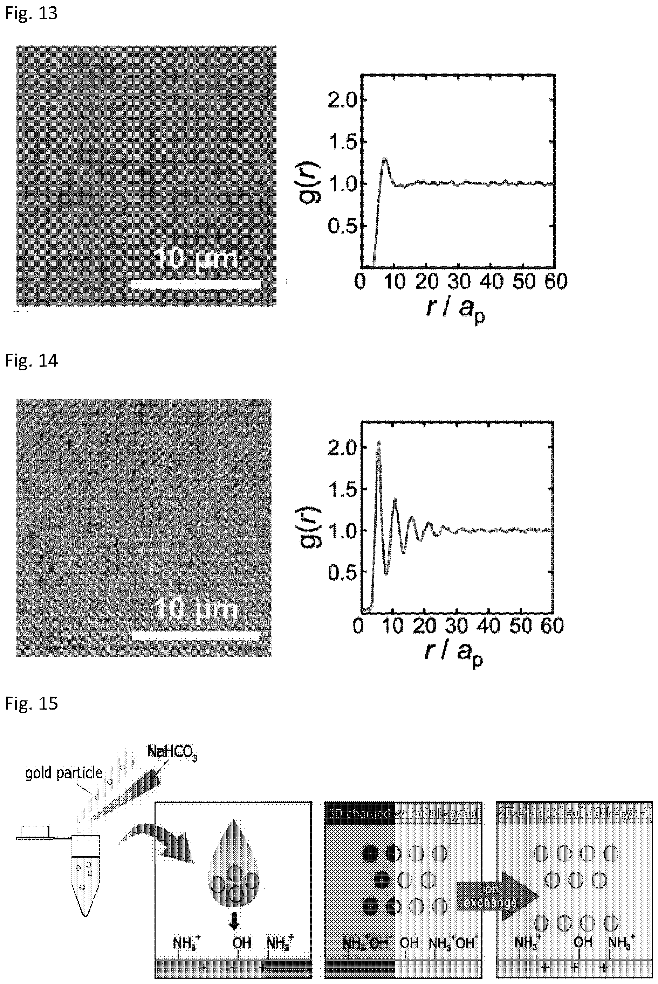

A silicon resin frame having a circular window was firmly attached to the APTES-modified glass substrate thus obtained to form a recess, and the recess was used as a cell for microscopic observation. A colloidal gold particle dispersion was dropped into the cell, and observation with an optical microscope was continued. The colloidal particles were adsorbed to the substrate before formation of three-dimensional colloidal crystals, and two-dimensional colloidal crystals were not formed (see the photograph of Fig. 13). In addition, when the radial distribution function g (r) was calculated, the peak intensity was low, and a plurality of peaks were not observed, so that a crystal structure was not observed (see the graph of Fig. 13).

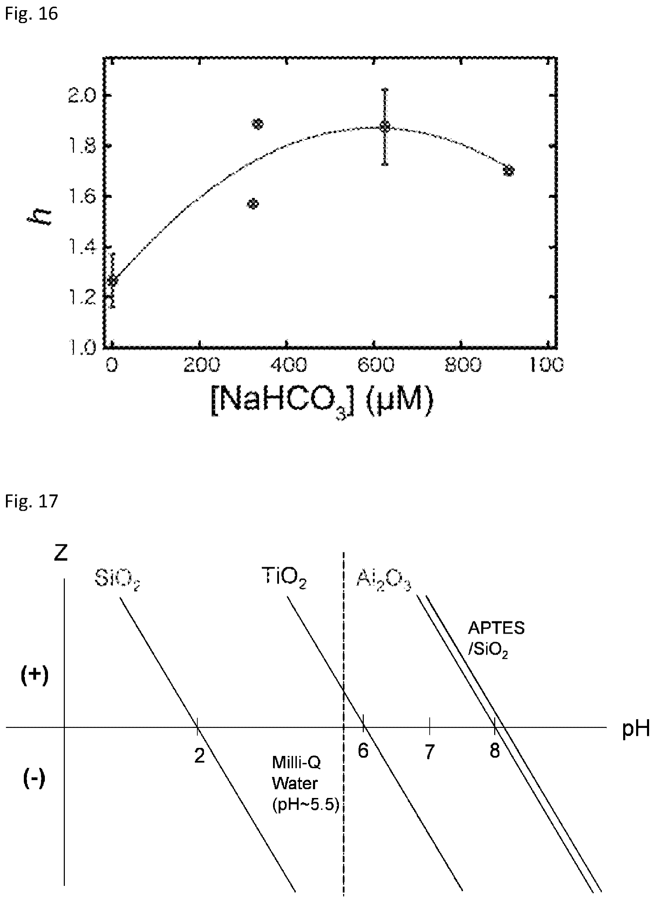

On the other hand, when NaHCO₃ or NaOH was added to the colloidal gold particle dispersion to increase the pH, three-dimensional charged colloidal gold crystals were generated. Thereafter, when the pH was lowered by adding an ion exchange resin to perform desalination, a part of the three-dimensional charged colloidal gold crystals was adsorbed to the substrate, and two-dimensional colloidal gold crystals were observed (see the photograph of Fig. 14 and Fig. 15). However, many defects were observed in the crystal structure. In addition, when the radial distribution function g (r) was calculated, a plurality of periodic peaks were observed together with a large peak, and a crystal structure was observed (see the right graph in Fig. 14). Fig. 16 is a graph showing the relationship between the NaHCO₃ concentration and the primary peak height h of the radial distribution function g (r). This graph reveals that the primary peak height h of the radial distribution function g (r) reaches the maximum value at around a NaHCO₃ concentration of 500 to 700 µM.

The above results can be described as follows (for reference, Fig. 17 shows the relationship between the surface potential and the pH of SiO₂, TiO₂, Al₂O₃, and APTES-modified SiO₂).

When no alkali is added to the colloidal gold particle dispersion, the surface charge of the APTES-modified glass substrate is positive. The colloidal gold particles having a negative surface charge are rapidly and randomly adsorbed to the surface of the APTES-modified glass substrate before becoming three-dimensional charged colloidal gold crystals. For this reason, two-dimensional colloidal gold crystals were not formed.

On the other hand, when an alkali is added to the colloidal gold particle dispersion, the surface charge of the APTES-modified glass substrate is negative. As a result, the colloidal gold particles having a negative surface charge which is the same as that of the APTES-modified glass substrate are not adsorbed to the surface of the APTES-modified glass substrate, and grow into three-dimensional charged colloidal gold crystals. Then, when the pH was lowered by charging the ion exchange resin, the amino group on the surface of the APTES-modified glass substrate was ionized, and the surface charge becomes positive. As a result, the three-dimensional charged colloidal gold crystals were adsorbed, and the two-dimensional colloidal gold crystals were transferred to the surface of the APTES-modified glass substrate. The reason why remarkable defects were observed in the crystal structure of the two-dimensional colloidal gold crystals is that the addition of an alkali thinned the electric double layer and caused melting of the three-dimensional charged colloidal gold crystals, or aggregation of the colloidal gold particles.

### <Production of two-dimensional colloidal gold crystal structure using TTIP-modified glass substrate>

### (Example 1)

### • Preparation of TTIP-modified glass substrate (substrate preparation step S1)

Into a fluororesin container, 70 mL of MeOH, 30 mL of acetonitrile, 666 µL of Milli-Q water, and 0.746 g of dodecylamine were added and mixed. A cover glass subjected to UV/O3 treatment and sulfuric acid treatment was placed in the mixture, 800 µL of TTIP was then added thereto, and the resulting mixture was shaken with a rotator for 1 hour. The cover glass was taken out, the surface of the glass substrate was washed with MeOH, and then the glass substrate was washed with Milli-Q water. Thereafter, the glass substrate was placed in a bar bottle filled with Milli-Q water and subjected to ultrasonic treatment for 10 minutes. The cover glass was taken out and the surface was washed with Milli-Q water and dried at 80°C to obtain a TTIP-modified glass substrate.

### • Preparation of charged colloidal gold particle dispersion (colloidal crystal dispersion preparation step S2)

In a centrifugal tube, 4 mL of an aqueous solution of 1.0 mM sodium 3-mercapto-1-propanesulfonate (MPS, Sigma-Aldrich Co. LLC was added to 4 mL of a dispersion (particle concentration: 0.006 wt%) of colloidal gold particles (average particle size: 156 nm, coefficient of variation: 9%) manufactured by TANAKA PRECIOUS METAL GROUP Co., Ltd., and the mixture was subjected to an ultrasonic treatment for 10 minutes. Since the thiol group of MPS is firmly coordinate-bonded to gold, the sulfo group is introduced into the surface of gold particles (see Fig. 3). Next, after centrifugation at 2000 rpm for 25 minutes, 5 mL of the supernatant was removed, 5 mL of Milli-Q water was added thereto, and the resulting mixture was subjected to ultrasonic treatment for 5 minutes to be redispersed. The centrifugation and washing by redispersion were repeated 3 times, and then centrifugation was performed again at 2000 rpm for 25 minutes. Then, the supernatant was removed, and the resultant was concentrated and redispersed to obtain an MPS-modified colloidal gold particle dispersion.

### • Production of two-dimensional colloidal gold crystal structure (two-dimensional colloidal crystal formation step S3)

A silicon resin frame having a circular window was firmly attached to the surface of the TTIP-modified glass substrate to form a recess. Then, 5 µL of an MPS-modified colloidal gold particle dispersion (concentration: 19 wt%) was dropped into the recess and allowed to stand. Observation was continued from the back side with an optical microscope. As a result, immediately after the MPS-modified colloidal gold particle dispersion was dropped, the colloidal gold particles were not adsorbed to the glass substrate, and three-dimensional charged colloidal gold crystals were gradually formed. When about 15 minutes passed after the colloidal gold particle dispersion was dropped, it was confirmed that the colloidal gold particles were adsorbed to the substrate while maintaining the crystal structure. Thereafter, the unadsorbed colloidal gold particles were washed off with Milli-Q water to obtain a two-dimensional charged colloidal gold crystal substrate.

The above result reveals that a two-dimensional charged colloidal gold crystal substrate can be obtained by using a TTIP-modified glass substrate having TiO₂ whose isoelectric point is close to the pH of Milli-Q water (isoelectric point is around 6) on its surface (see Fig. 17).

In the two-dimensional colloidal crystal formation step S3 of Example 1, carbon dioxide gas in the air is used to adjust the pH across the isoelectric point. The mechanism is as follows.
(1) CO₂ in the atmosphere is dissolved as CO₂ (gas) in water.
(2) CO₂ (gas) dissolved in water reacts with water to produce carbonic acid.

   CO₂ + H₂O → H₂CO₃
(3) Carbonic acid dissociates to produce H⁺ and the pH decreases.

   H₂CO₃ → H⁺+HCO₃⁻

The concentration of carbon dioxide gas in the atmosphere is 0.04%. When the concentration of carbon dioxide gas in water at the equilibrium state is calculated using Henry's law, it is calculated to be 1.4 × 10⁻⁵ M. The acid dissociation constant of H₂CO₃ → H⁺ + HCO₃⁻ is Ka = 4.4 × 10⁻⁷ at 25°C, and from this value, [H⁺] = 2.8 × 10⁻⁶ M is calculated, and pH is 5.6. On the other hand, since the isoelectric point of the TTIP-modified glass substrate is 6.0, the condition of 5.6 < the isoelectric point (6.0) of the TTIP-modified glass substrate < the initial pH of the sample is set, and the sample is placed in the air. Thereafter, the carbon dioxide gas in the air is gradually dissolved to lower the pH, and the pH changes across the isoelectric point (6.0) of the substrate.

### (Example 2)

### • Preparation of TTIP-modified glass substrate (substrate preparation step S1)

Into a fluororesin container, 35 mL of MeOH, 15 mL of acetonitrile, 333 µL of Milli-Q water, and 0.373 g of dodecylamine were charged and mixed. A cover glass subjected to UV/O₃ treatment and sulfuric acid treatment was placed in the mixture, 400 µL of TTIP was then added thereto, and the resulting mixture was shaken for 1 hour. The cover glass was taken out and placed in a bar bottle filled with Milli-Q water and subjected to ultrasonic treatment for 5 minutes. The surface was then washed with Milli-Q water and dried at 80°C.

Using the TTIP-modified glass substrate thus obtained, a two-dimensional charged colloidal gold crystal substrate was obtained by the same operation as in Example 1.

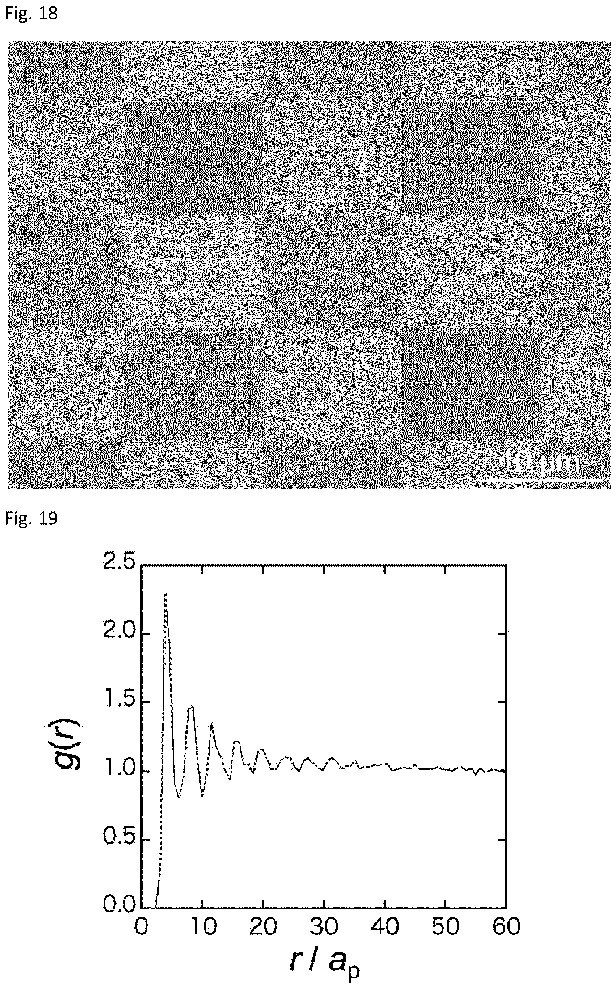

Fig. 18 shows two-dimensional colloidal gold crystals on a TTIP-modified glass substrate obtained under the condition of [NaHCO₃] = 100 µM. From the photograph of Fig. 18, two-dimensional colloidal gold crystals having fewer defects in the crystal structure were observed in a larger area than the two-dimensional colloidal gold crystals obtained on the APTES substrate as shown in Fig. 14. Fig. 19 shows a radial distribution function obtained from the photograph of Fig. 18. This radial distribution function was compared with the radial distribution function (right in Fig. 14) of the two-dimensional colloidal gold crystal obtained on the APTES substrate, and more peaks were obtained. Thus, it was found that the two-dimensional colloidal gold crystal had fewer defects in the crystal structure.

### (Example 3)

### <Production of two-dimensional colloidal silica crystal structure using TTIP-modified glass substrate>

A two-dimensional colloidal silica crystal structure was prepared using a colloidal silica particle dispersion (KE-P100 manufactured by NIPPON SHOKUBAI CO., LTD., particle size: 1 µm, concentration: 3.0 vol%, salt-free system). An operation procedure will be described below.

### • Preparation of TTIP-modified glass substrate (substrate preparation step S1)

Into a fluororesin container, 35 mL of MeOH, 15 mL of acetonitrile, 333 µL of Milli-Q water, and 0.373 g of dodecylamine were charged and mixed. A cover glass subjected to UV/O3 treatment and sulfuric acid treatment was placed in the mixture, 400 µL of TTIP was then added thereto, and the resulting mixture was shaken for 1 hour. The cover glass was taken out, the surface of the glass substrate was washed with MeOH, and then the glass substrate was washed with Milli-Q water. Thereafter, the glass substrate was placed in a bar bottle filled with Milli-Q water and subjected to ultrasonic treatment for 10 minutes. The cover glass was taken out and washed with Milli-Q water and dried at 80°C.

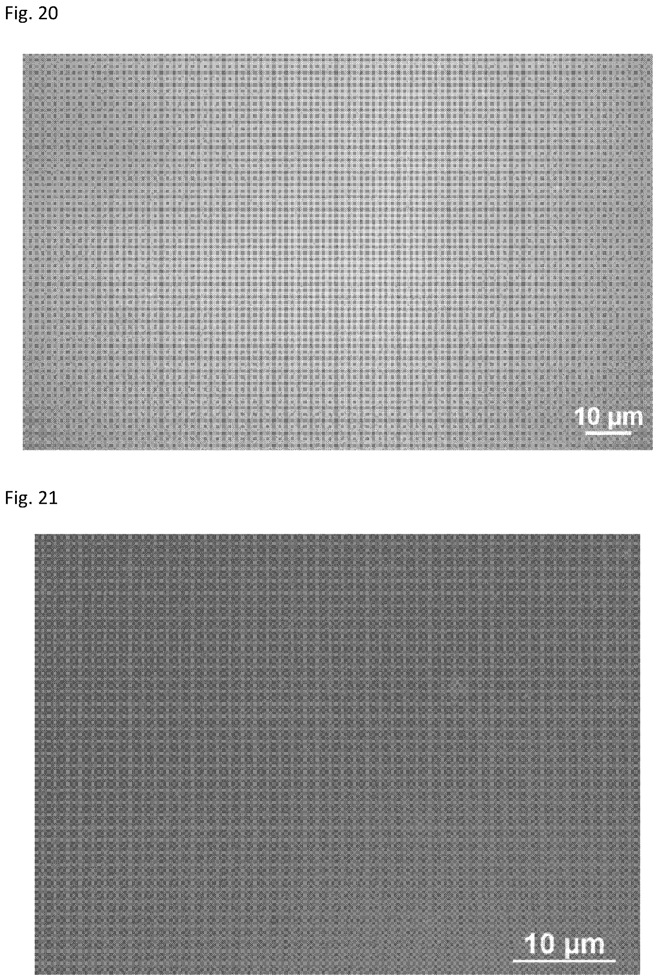

A silicon resin frame having a circular window was firmly attached to the surface of the TTIP-modified glass substrate thus obtained to form a recess. Then, 100 µL of a colloidal silica particle dispersion was dropped into the recess, and optical microscopic observation was performed. It was confirmed that three-dimensional colloidal silica crystals were dispersed. Thereafter, 11.1 µL of 1 mM HCl was added dropwise to the dispersion, thereby adjusting the HCl concentration of the dispersion to 100 µM. The cell was then washed with Milli-Q water to remove excessive silica particles. Fig. 20 shows an optical micrograph of the surface of the TTIP-modified glass substrate after washing. This photograph reveals that two-dimensional colloidal silica crystals having very few defects in the crystal structure were formed on the surface of the TTIP-modified glass substrate.

### (Example 4)

### <Production of two-dimensional polystyrene colloidal crystal structure using TTIP-modified glass substrate>

A two-dimensional polystyrene colloidal crystal structure was produced using a polystyrene particle dispersion (average particle size 430 nm, 10 vol%). That is, using the TTIP-modified glass substrate produced in Test Example 1, 5 µL of polystyrene particles (particle size 430 nm, 10 vol%) was dropped onto the substrate. After confirming that the three-dimensional charged colloidal crystals were formed, 4 µL of 200 µM HCl was dropped thereon. Then, the cell was washed with Milli-Q water to remove excessive polystyrene particles. Fig. 21 shows an optical micrograph of the surface of the TTIP-modified glass substrate thus obtained. This photograph reveals that two-dimensional polystyrene colloidal crystals having very few defects in the crystal structure were formed on the surface of the TTIP-modified glass substrate.

### (Example 5)

### <Production of two-dimensional colloidal crystal structure of positively charged colloidal particles>

A three-dimensional colloidal crystal dispersion of positively charged colloidal particles was prepared, and the colloidal particles were allowed to be adsorbed onto a glass substrate coated with a thin film layer of TEOS : ALIP = 1 : 9. The substrate was initially positively charged, and the substrate was then negatively charged by addition of an alkali (NaOH), thereby causing the colloidal particles to be adsorbed to the substrate.

Positively charged polystyrene particles were synthesized and used by the following method.

A mixed liquid of 14 mL of Milli-Q water and 126 mL of ethanol was charged into a glass container, and 10 g of polyvinylpyrrolidone was added thereto. The mixture was stirred at 500 rpm for 10 minutes using a magnetic stirrer, and then nitrogen bubbling was performed for 5 minutes. To this, 0.1388 g of azobisisobutyronitrile (reaction initiator) as a polymerization initiator, 0.2030 g of ammonium chloride (electrolyte), 0.0062 g of Nile Red (fluorescent dye), 10 mL of styrene (monomer), and 0.5 mL of divinylbenzene (crosslinking agent) were added, and nitrogen bubbling was performed for 5 minutes while rotating with a stirrer. The mixture was placed in a water bath, reacted at 70°C for 24 hours, then taken out from the water bath, and cooled at room temperature with stirring at 300 rpm. Spherical particles were obtained by the above reaction. The particle size determined by dynamic light scattering was 789 nm, and the zeta potential was +30.9 mV.

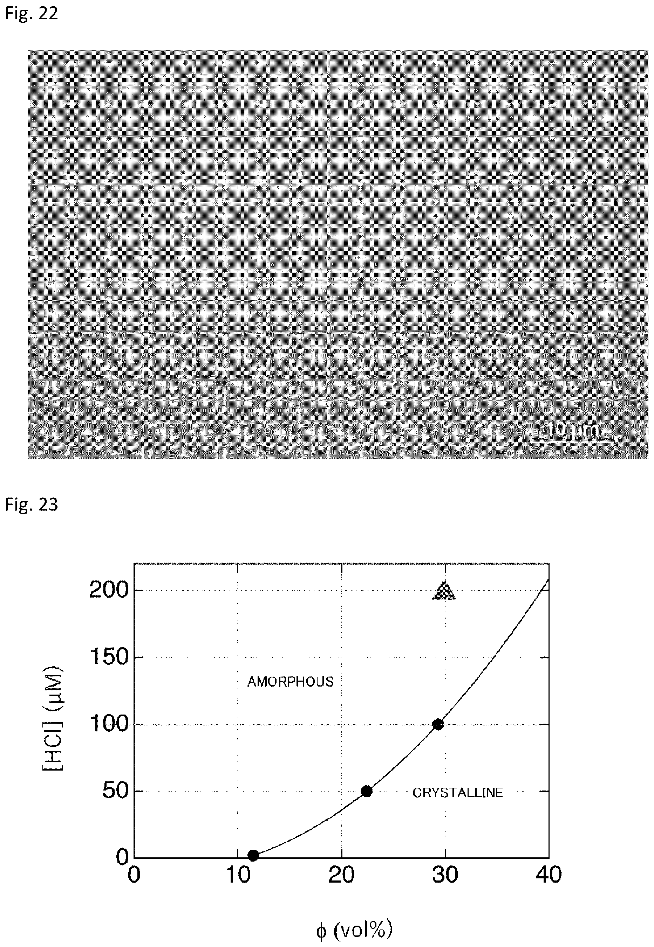

A thin film layer of TEOS : ALIP = 1 : 9 was formed on the surface of a cover glass, a silicon sheet having a circular hole was attached thereto, and this was used as a microscopic observation cell. The bottom surface of the sample cell was observed with inverted microscopic light. Into the cell, 50 µl of the positively charged polystyrene colloidal particles was dropped, and after confirming that three-dimensional charged colloidal crystals were formed, 5 µL of 1 mM NaOH was added dropwise thereto. NaOH diffused into the colloidal sample over time, and the particles were adsorbed to the substrate. The cell was washed with Milli-Q water to remove unadsorbed polystyrene particles. Fig. 22 shows an optical micrograph of the substrate after water washing. The particles were adsorbed to the substrate while maintaining the two-dimensional crystal structure. The distance between particle centers obtained by image analysis was about 960 nm, and the particle concentration was about 41.1 vol%.

### - Relationship between distance between particles constituting colloidal crystals and salt concentration-

The relationship between the distance between particles in the three-dimensional colloidal crystals and the salt concentration of the colloidal dispersion used in the preparation of the two-dimensional colloidal crystal structure was examined.

### • Preparation of three-dimensional colloidal crystals

Silica particles (KE-P100 manufactured by NIPPON SHOKUBAI CO., LTD.) having a particle size of 1000 nm were dispersed in pure water, and the resulting dispersion was subjected to deionization purification in the presence of an ion exchange resin. The number of surface charges of the silica thus obtained was determined by particle electrical conductivity measurement, and it was 10460/particle.

A silicon sheet having a circular hole was attached to the cover glass for an optical microscope, which was washed by the sulfuric acid treatment, to thereby obtain a microscopic observation cell. Then, hydrochloric acid was added to the silica particle dispersion subjected to deionization purification, to prepare silica particle dispersions having various hydrochloric acid concentrations. Each silica particle dispersion was filled in an observation cell and observed from the bottom surface of the sample with an inverted optical microscope.

As a result, it has been found that electrostatic interaction between particles is strongly shielded as the HCl concentration increases, and thus colloidal crystallization hardly occurs and a high particle concentration φ is required for crystallization. In addition, the silica particles precipitated over time, and the particle concentration φ at the cell bottom surface increased. When the particle concentration φ was small, the particles were randomly arranged and became in an amorphous state. Under the condition where the particle concentration φ was sufficiently large, the silica particles were regularly arranged and showed a colloidal crystal structure. The value of the particle concentration φ was determined by measuring the distance between particles from a microscopic image.

Fig. 23 shows the values of the particle concentrations φ at the crystal-amorphous phase boundary at various HCl concentrations (the curve is an approximate curve obtained by the least squares method). The side on which the salt concentration is lower than the boundary corresponds to the crystalline state. For example, at a HCl concentration = 100 µM, the phase boundary was located at a particle concentration φ = about 30 vol%. Table 4 shows the particle concentrations at the phase boundary and the distance between surfaces in various values of [HCl].

**[Table 4]**

| [HCl] (µM) | Distance between particle surfaces (nm) | Particle concentration (vol%) |
|---|---|---|
| 0 (salt-free) | 860 | 11.5 |
| 50 | 490 | 22.4 |
| 100 | 360 | 29.3 |

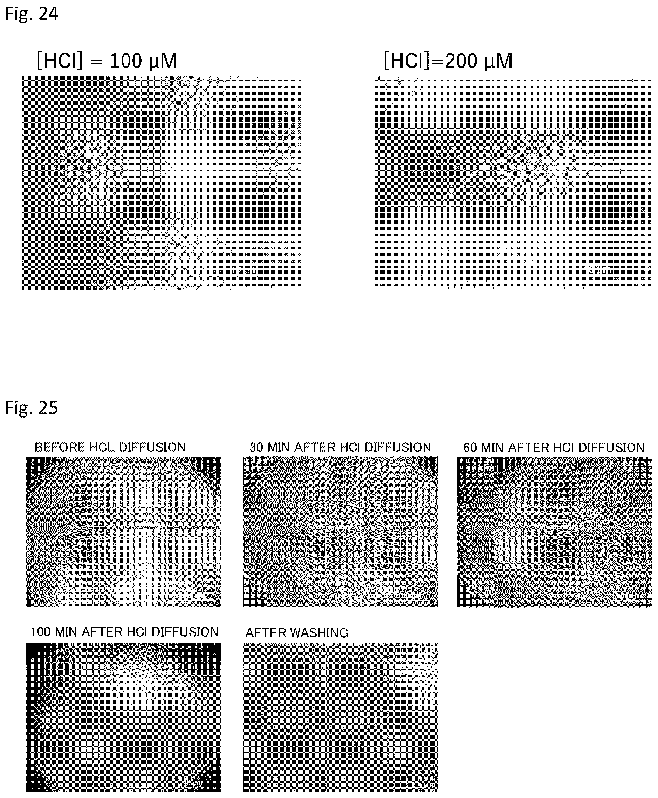

Fig. 24 shows optical micrographs of the case of HCl concentration = 100 µM and the case of HCl concentration = 200 µM of a colloidal silica with a particle concentration φ = 30 vol%. These conditions respectively correspond to crystalline (phase boundary) and amorphous states. The latter condition is indicated by the triangular symbol in Fig. 23. This result shows that when 200 µM of HCl is added, a crystal structure having particle spacing is not generated even at a particle concentration φ = about 30 vol% (distance between particle surfaces = about 360 nm).

### <Observation of two-dimensional colloidal crystal formation step with optical microscope>

The method for producing a two-dimensional colloidal crystal structure of the present invention is characterized in that the two-dimensional colloidal crystals can be fixed even under the condition of a salt concentration of 100 µM or less. A layer of mixed solution of TEOS : TTIP = 3 : 7 was formed on the surface of a cover glass having an insulating layer formed thereon by a sol-gel method. A silicon sheet having a circular hole was attached thereto, and this was used for a microscopic observation cell. The bottom surface of the sample cell was observed using an inverted microscope.

Into the cell, 100 µl of a colloidal silica (φ = 30 vol%) was dropped. Next, a pipette tip having a semipermeable membrane attached thereto was inserted into the colloidal silica, and the colloidal silica was brought into contact with a 100 µM HCl solution via the semipermeable membrane. Although HCl diffuses into the colloid over time, the concentration of HCl in the colloid is at most 100 µM.

Fig. 25 shows microscopic images showing the lapse of time. The silica particles were adsorbed to the substrate over time, and after 100 minutes, all of the silica particles in the field of view were adsorbed. The pipette tip was removed 100 minutes after the start of diffusion, and the cell was washed with Milli-Q water to remove unadsorbed silica particles. The particles were adsorbed to the substrate while maintaining the crystal structure even after water washing. The above results reveal that the silica particles can be adsorbed to the substrate even under the low salt concentration condition of 100 µM, and crystals having wide particle spacing can be fixed. Such a structure having a wide distance between particles means that high sensitivity can be achieved in a colloidal crystal for a substrate for SPR measurement using metal particles.

The present invention is not limited to the description of the embodiments and examples of the invention. Various modifications that can be easily conceived by those skilled in the art without departing from the scope of the claims are also included in the present invention.

### INDUSTRIAL APPLICABILITY

The present invention can be used for a transducer in a sensor utilizing surface adsorption, or can be used for spectroscopic analysis utilizing surface plasmon resonance (SPR) .

### REFERENCE SIGNS LIST

- 1: Substrate
- 2: Metal oxide layer
- 3: Colloidal particles
- 4: Two-dimensional colloidal crystal layer
- 5: Three-dimensional colloidal gold crystals
- 6: Dispersion
- S1: Substrate preparation step
- S2: Colloidal crystal dispersion preparation step
- S3: Two-dimensional colloidal crystal formation step

## Claims

1. A method for producing a two-dimensional colloidal crystal structure, the method comprising:
a substrate preparation step of preparing a substrate having a metal oxide layer whose surface has an isoelectric point of 4 or more and 8 or less;
a colloidal crystal dispersion preparation step of preparing a dispersion of charged three-dimensional colloidal crystals composed of colloidal particles having the same sign as a surface charge of the metal oxide layer; and
a two-dimensional colloidal crystal formation step of bringing the dispersion of the charged three-dimensional colloidal crystals into contact with the metal oxide layer, and then adjusting the surface charge of the metal oxide layer so as to have a sign different from a surface potential of the colloidal particles constituting the charged three-dimensional colloidal crystals to transfer two-dimensional colloidal crystals onto the substrate.

2. The method for producing a two-dimensional colloidal crystal structure according to claim 1, wherein a change in pH of the dispersion of the charged three-dimensional colloidal crystals in the two-dimensional colloidal crystal formation step is 4 or less, and a salt concentration is 150 µM or less.

3. The method for producing a two-dimensional colloidal crystal structure according to claim 1 or 2, wherein the metal oxide layer has an isoelectric point of 4.5 to 7.5.

4. The method for producing a two-dimensional colloidal crystal structure according to claim 1 or 2, wherein a metal element in the metal oxide layer is one kind of Ti or one kind of Al, or at least two kinds of Ti, Si, and Al.

5. The method for producing a two-dimensional colloidal crystal structure according to claim 1 or 2, wherein the metal oxide layer contains titania or a titania-containing composite oxide.

6. The method for producing a two-dimensional colloidal crystal structure according to claim 1 or 2, wherein the substrate preparation step is performed by polycondensation of a hydrolysate of a metal alkoxide-containing solution.

7. The method for producing a two-dimensional colloidal crystal structure according to claim 1 or 2, wherein the charged three-dimensional colloidal crystals are composed of metal colloidal particles.

8. The method for producing a two-dimensional colloidal crystal structure according to claim 7, wherein the metal colloidal particles are colloidal gold particles.

9. The method for producing a two-dimensional colloidal crystal structure according to claim 1 or 2, wherein a coefficient of variation of a particle size of the colloidal particles constituting the charged three-dimensional colloidal crystals is 20% or less.

10. The method for producing a two-dimensional colloidal crystal structure according to claim 1 or 2, wherein the colloidal particles constituting the charged three-dimensional colloidal crystals have an average particle size of 50 nm or more and 500 nm or less.

11. A two-dimensional colloidal crystal structure, wherein a metal oxide layer having an isoelectric point of 4 or more and 8 or less is formed on a substrate, and a two-dimensional colloidal crystal layer is formed on the metal oxide layer.

12. The two-dimensional colloidal crystal structure according to claim 11, wherein the metal oxide layer has an isoelectric point of 4.5 or more and 7.5 or less.

13. The two-dimensional colloidal crystal structure according to claim 11 or 12, wherein a metal element in the metal oxide layer is one kind of Ti or one kind of Al, or at least two kinds of Ti, Si, and Al.

14. The two-dimensional colloidal crystal structure according to claim 11 or 12, wherein the metal oxide layer contains titania or a titania-containing composite oxide.

15. The two-dimensional colloidal crystal structure according to claim 11 or 12, wherein the metal oxide layer contains a hydrolyzed polycondensate of a metal alkoxide.

16. The two-dimensional colloidal crystal structure according to claim 11 or 12, wherein the two-dimensional colloidal crystal layer contains metal colloidal particles.

17. The two-dimensional colloidal crystal structure according to claim 16, wherein the metal colloidal particles are colloidal gold particles.

18. The two-dimensional colloidal crystal structure according to claim 11 or 12, wherein the colloidal particles constituting the two-dimensional colloidal crystal layer have a coefficient of variation of particle size of 20% or less.

19. The two-dimensional colloidal crystal structure according to claim 11 or 12, wherein the colloidal particles constituting the two-dimensional colloidal crystal layer have an average particle size of 50 nm or more and 500 nm or less.
